# NEW EUROPEAN PATENT SPECIFICATION

(11) **EP 1 423 268 B2**
(45) Date of publication and mention of the opposition decision: **04.12.2013**
(45) Mention of the grant of the patent: 13.10.2010
(21) Application number: 02794678.9
(22) Date of filing: 06.08.2002
(51) Int. Cl.: B32B 3/26, B65D 23/02, B65D 25/14, B65D 81/26, B65D 81/28

(54) **METHOD AND COMPOSITION FOR AN IN-MOLD LINER**
VERFAHREN UND ZUSAMMENSETZUNG FÜR EINE AUSKLEIDUNG IM WERKZEUG
PROCEDE ET COMPOSITION POUR UN REVETEMENT DANS LE MOULE

(30) Priority: 06.08.2001 US 310374 P
(43) Date of publication of application: 02.06.2004
(73) Proprietor: CSP Technologies, Inc., Amsterdam New York 12010 (US)
(72) Inventor: GIRAUD, Jean, Pierre, F-75012 Paris (FR)
(74) Representative: Potter Clarkson LLP
(86) International application number: PCT/US2002/025084
(87) International publication number: WO 2003/013843

(56) References cited:
- WO-A1-00/17260
- WO-A1-00/76879
- WO-A1-96/33108
- WO-A1-99/62697
- JP-A- H08 238 667
- US-A- 3 833 406
- US-A- 4 939 030
- US-A- 4 939 030
- US-A- 5 603 401
- US-A- 5 759 653
- US-A- 5 759 653
- US-A- 5 789 044
- US-A- 5 789 044
- US-A- 5 811 163
- US-A- 5 811 163
- US-B1- 6 177 183
- US-B1- 6 177 183
- 'Webster's New Collegiate Dictionay', 1981, G.&C.MERRIAM CO. deel 'enty ''composition??, item 4'

## Description

### FIELD OF THE INVENTION

The present invention is directed to a method of forming a container provided with a liner formed in a mold which changes the properties of the container, when compared to a container not having the liner. The liner may exhibit absorption properties, it may release an agent into the surrounding environment, it may undergo some action in response to a condition or thing in the environment, such as the presence of water or a gas. It may provide a barrier, and/or it may exhibit permeability.

US 6,177,183 describes a monolithic composition having an activation material. The composition has interconnecting channels and maybe used to form shaped articles such as plug type inserts and liners for closed containers, or films, sheets, beads or pellets.

US 6,217,959 discloses a method of forming a container having a liner formed in the mold wherein the method comprises the steps of :
inserting a liner by a mechanism within a mold for forming a container, wherein the liner is a composition comprising a material selected from the group consisting of an absorption material, a releasing material, a barrier material, and an activation material;
subsequently inserting a flowable, plastic material into the mold at a position which locates the liner on an interior position of the container; and closing the mold.

### DESCRIPTION OF THE INVENTION

According to the invention, there is provided a method as defined in the appended Claim 1. Aspects of the invention are defined in the appended Claims 2 to 32.

The present invention relates to an in-mold lining method that results in a container having at least one liner attached to the container. Examples of absorption material include, but are not limited to one or more one or more desiccating compounds. In general, there are three primary types of desiccating compounds that may be used with the present invention. The first type comprises chemical compounds that can combine with water to form hydrates. Examples of such desiccant are anhydrous salts which tend to absorb water or moisture and form a stable hydrate. In this reaction with the moisture, a stable compound is formed within which the moisture is held and prevented from release by chemical interaction.

The second type of desiccant compounds are those which are considered to be reactive. These compounds typically undergo a chemical reaction with water or moisture and form new compounds within which the water is combined. These newly formed compounds are generally irreversible at low temperature and require a significant amount of energy to be regenerated so that they may be reuse as a desiccant. These reactive type desiccants are mainly used in solvent drying and as water-absorbing materials to polymers which must themselves be maintained in a moisture reduced state.

The third type of desiccants obtain their moisture absorbing capabilities through physical absorption. The absorption process is accomplished because of a fine capillary morphology of the desiccant particles which pulls moisture therethrough. The pore size of the capillaries, as well as the capillaries' density determine the absorption properties of the desiccant. Examples of these physical absorption desiccants include molecular sieves, silica gels, clays (e.g. montmorillimite clay), certain synthetic polymers (e.g. those used in baby diapers), and starches. Because these types of physical absorption desiccants are both inert and non-water soluble, they are preferred for many applications.

In another embodiment, the absorbing materials may be either: (1) metals and alloys such as, but not limited to, nickel, copper, aluminum, silicon, solder, silver, gold; (2) metal-plated particulate such as silver-plated copper, silver-placed nickel, silver-plated glass microspheres; (3) inorganics such as BaTiO₃, SrTiO₃, SiO₂, Al₂O₃, ZnO, TiO₂, MnO, CuO, Sb₂O₃, WC, fused silica, fumed silica, amorphous fused silica, sol-gel silica, sol-gel titanates, mixed titanates, ion exchange resins, lithium-containing ceramics, hollow glass microspheres; (4) carbon-based materials such as carbon, activated charcoal, carbon black, ketchem black, diamond powder; and (5) elastomers, such as polybutadiene, polysiloxane, and semi-metals, ceramic. In another example, the absorbing material may be calcium oxide. In the presence of moisture and carbon dioxide, the calcium oxide is converted to calcium carbonate. Accordingly, calcium oxide may be used as the absorbing material in application where absorption of carbon dioxide is needed. Such applications include preserving fresh foods (e.g. fruits and vegetables) that give off carbon dioxide.

It is believed that the higher the absorbing material concentration in the mixture, the greater the absorption capacity will be of the final composition. However, the higher absorbing material concentration should cause the body to be more brittle and the mixture to be more difficult to either thermally form, extrude or injection mold. In one embodiment, the absorbing material loading level can range from 10% to 20%, 20% to 40% and 40% to 60% by weight with respect to the polymer.

In yet another embodiment, examples of releasing material include, but are not limited to, any suitable form which will release dispersant to surrounding atmosphere, including solid, gel, liquid, and in some cases a gas. These substances can perform a variety of functions including: serving as a fragrance, flavor, or perfume source; supplying a biologically active ingredient such as pesticide, pest repellent, antimicrobials, bait, aromatic medicines, etc.; providing humidifying or desiccating substances; delivering air-borne active chemicals, such as corrosion inhibitors; replenishment such as carbon dioxide; ripening agents and odor-making agents, etc. For example, the releasing material may have biocide properties. Such biocides may include, but are not limited to, pesticides, herbicides, nematacides, fungicides, rodenticides and/or mixtures thereof.

Other releasing materials include fragrances, including natural, essential oils and synthetic perfumes, and blends thereof. Typical perfumery materials which may form part of, or possible the whole of, the active ingredient include: natural essential oils such as lemon oil, mandarin oil, clove leaf oil, petitgrain oil, cedar wood oil, patchouli oil, lavandin oil, neroli oil, ylang oil, rose absolute or jasmin absolute; natural resins such as labdanum resin or olibanum resin; single perfumery chemicals which may be isolated from natural sources of manufactured synthetically, as for example alcohols such as geraniol, nerol, citronellol, linalol, tetrahydrogeraniol, betaphenylethyl alcohol, methyl phenyl carbinol, dimethyl benzyl carbinol, menthol or cedrol; acetates and other esters derived form such alcohols-aldehydes such as citral, citronellal, hydroxycitronellal, lauric aldehyde, undecylenic aldehyde, cinnamaldehyde, amyl cinnamic aldehyde, vanillin or heliotropin; acetals derived from such aldehydes; ketones such as methyl hexyl ketone, the ionones and methylionones; phenolic compounds such as eugenol and isoeugenol; synthetic musks such as musk xylene, musk ketone and ethylene brassylate.

In yet another embodiment, the activation material may include a material that requires a specific liquid, vapor, or gas to activate the material and, after activation, the material releases the desired vapor, liquid, or gas. In one embodiment, moisture is used to activate the material. In another embodiment, oxygen is used to activate the material. In a further embodiment, an acid is used to activate the material. In yet a further embodiment, a base is used to activate the material. In yet another embodiment, a variety of materials may be released. Such material may comprise any suitable form which will release dispersant to surrounding atmosphere, including solid, gel, liquid, and, in some cases, a gas. These substances can perform a variety of functions, including: serving as a fragrance or perfume source; supplying a biologically active ingredient such as a biocide, antimicrobial agent, pesticide, pest repellent, bait, aromatic medicine, etc.; providing humidifying or desiccating substances; or delivering air-borne active chemicals, such as corrosion inhibitors, ripening agents and odor-masking agents.

Another example of activation materials are enzyme systems. Suitable enzyme systems may include glucose oxidase; a glucose/glucose oxidase combination; a glucose oxidase/sucrose combination; a starch/amylase/glucose oxidase combination; a cellulose/cellulase/glucose oxidase combination; a milk powder/lactase/glucose oxidase combination; a glucose oxidase/glucose isomerase/fructose combination; a glucose oxidase/lactase/whey solids/lactose combination; a glucose oxidase/lactase/lactose combination; a glucose oxidase/maltase/starch combination; a glucose oxidase/maltase/maltose combination; a mushroom tyrosinase/tyrosine combination; a glucose oxidase/sucrose/sucrase combination; an alcohol/alcohol oxidase; a lactate/lactate oxidase; an amino acid/amino acid oxidase; a golactose/golactose oxidase; a xanthine/xanthine oxidase; an amine/amine oxidase; an ascorbate/ascorbate oxidase; a chelione/chelione oxidase; and any combination of these enzymes.

In yet another embodiment of activation material, some catalyzed reactions may generate hydrogen peroxide as a byproduct. The released hydrogen peroxide may be of some benefit to extend shelf life of meats, poultry and fish if the hydrogen peroxide is in direct contact with the wet surfaces of those foods. Alternatively, concern about the generation of hydrogen peroxide may be minimized by including catalase in the enzyme system.

In a further embodiment, activation material may also be added to provide the polymer with one or more specific properties, such as acidity, basicity, thermal conductivity, electrical conductivity, dimensional stability, low dielectric constant, high-dielectric constant, ion-exchange capabilities, galvanic potential, flame retardency, etc. It is believed that the higher the activation material concentration in the mixture, the greater the capacity will be of the final material. However, the higher activation material concentration should cause the body to be more brittle and the mixture to be more difficult to either thermally form, extrude or injection mold. In one embodiment, the activation material loading level can range from 10% to 20%, 20% to 40% and 40% to 60% by weight with respect to the polymer.

Suitable barrier and permeable materials include the conventional material that are used to achieve enhanced barrier or permeable properties. It is to be understood that two or more materials may be added with one functioning as an absorbing material and the other then functioning as a releasing material to form an activation material. An example would be a desiccant (i.e. absorbing) and a releasing material such as a dispersant.

For example, in one embodiment, a liner may be employed that is thinner than is typically used for the plastic layer during injection molding or than is typically used for either parts of a comolded material. As such, in one embodiment, the present invention allows for placing an additional plastic layer that is typically thinner than previously used in co-molding processes. In a specific embodiment, the thickness of the liner may range from about 0.0001 inches to about 0.001 inches, more particularly from about 0.00025 inches to about 0.00075 inches.

In one embodiment, the in-mold liner process is performed by inserting a liner within an open mold prior to closing of the mold around an extruded hot plastic tube or a heated injection molded plastic preform. Subsequent mold closing and extrusion forms the hot plastic around the liner to the shape of the mold and activates a heat sensitive adhesive that provides a permanent bond which is substantially incapable of being broken by moisture or otherwise. Also, such in-mold lining provides a smooth transition between the liner and the adjacent surface of the container and may further provide additional strength since the liner cooperates with the container wall in resisting deformation. Such strengthening also allows the use of less plastic to blow mold the container and thereby reduces the ultimate cost to the consumer.

In another embodiment, the in-mold liner of the present invention may have dual roles - the liner may both be a liner and a printed label. For example, the liner may have printed information on one side and the composition with the desired property (e.g. absorption, releasing, barrier, and/or activation) on the other side. In another specific example, the container can be composed of a clear plastic and the liner can be inserted in the inside of the container. The printing can be located on the side of the liner facing the outside of container. As such, the liner could be tamper-resistant because the clear plastic is protecting the printing (e.g. this could be used in application where tamper-resistance of labels is important such as in the pharmaceutical industry). In addition, the side of the liner facing the inside of the container can have the desired composition.

In a further embodiment, the liner may be adhered to the injected molded plastic by employing a liner composed of a polymeric material that has a melting point that is substantially equivalent to the injected polymeric material. As such, when the polymeric material is injected into the cavity where the liner is secured, the liner is heated to a sufficient temperature to melt the liner to the point where the surface contacting the injected polymeric material is adhered to the surface but below the point where the liner is deformed. Consequently, suitable polymeric materials including blends can be formulated to achieve this result.

Examples of suitable liners include, but are not limited to, paper-like materials and thermoplastic materials including polyolefins such as polypropylene and polyethylene, polyisoprene, polybutadiene, polybutene, polysiloxane, polycarbonates, polyamides, ethylene-vinyl acetate copolymers, ethylene-methacrylate copolymer, poly(vinyl chloride), polystyrene, polyesters, polyanhydrides, polyacrylianitrile, polysulfones, polyacrylic ester, acrylic, polyurethane and polyacetal, or copolymers or mixtures thereof.

The liner in the form of a film is prepared for input into the system (e.g. a roll or stack of material). In the next step, a robotic arm or other mechanism that can properly place the liner in the mold (e.g. "a pick and place) is employed. The mechanism picks-up the liner and positions the liner in the mold apparatus having transfer heads that engage and move the labels. For example, transfer heads are connected to a drive mechanism that cycle the heads back and forth between a liner pick up position and a liner transfer position. The heads carry vacuum cups for engaging and holding liners. When in the liner pick up positions, the heads are moved against liners to form vacuum connections with the liners. Movement of the heads away from the pick up position pulls liners. The liners are carried with the heads for subsequent placement in cavities in the mold sections.

In one embodiment, the liner is placed on the core. The liner may be held in place in the mold by conventional methods known in the art such as suction or charging the film with static electricity or any combination of methods. Subsequently, the mold closes and plastic is injected into the mold. The mold then opens and the molded part is ejected with the liner attached to the plastic.

In a further embodiment, the liner can be secured to the core by first applying the liner to the core and then employing hot air to slightly shrink the polymeric liner to the core.

In yet another embodiment, a printed film can be co-laminated to the liner prior to placing in the mold. Alternatively, two or polymeric materials may be co-laminated to form a laminated liner.

In yet another embodiment, the liner of the present invention may also include printed information on either one surface of the liner or on both surfaces of the liner. In this way, the liner may have dual purposes - both as a material with specific properties (e.g. barrier, permeability) and as a label with printed information.

In one specific embodiment, a plastic container may be produced that has high oxygen barrier properties and thus, may be used in applications where metal containers were previously used because of their oxygen barrier properties. For example, EVOH (i.e. ethylene vinyl alcohol) film may be used as the liner to form at least a two-layered composite material.

In another specific embodiment, a film layer may be used that acts as a "skin" layer between the plastic composition of the container and the material in the container. In this way, the material in the container does not come into direct contact with the plastic composition of the container. For example, the plastic composition may be composed of an absorption material, a releasing material and/or an activation material. In order to eliminate any risk of the plastic composition contaminating the contents of the container (e.g. pharmaceutical products), a liner is placed as the outside layer of the plastic composition so that the contents of the container do not contact the plastic composition. The liner may be selected as a material that does not contaminate the product (e.g. a material that has been used with the product and thus, has been recognized as safe for use with the product). At the same time, the liner may be selected as a material that does not inhibit the properties of the plastic composition. For example, for a plastic composition that is composed of a water absorption material (e.g. a desiccant), a liner is selected with high water permeability properties. In another example, for a plastic composition that is composed of a material that absorbs a specific gas or vapor, a liner is selected with high permeability properties for the specific gas or vapor. In yet another example, for a plastic composition that is composed of a material that releases a specific material, a liner is selected with high permeability properties for the specific material. In a further example, for a plastic composition that is composed of an activation material, a liner is selected with high permeability properties for the specific activation material. Moreover, the liner may be composed of a material that has a specific transport rate and thus, the liner may assist in controlling the rate of transfer (and thus the amount of transfer) of either the absorbing, releasing or activation material to the plastic composition.

In yet another specific embodiment, an oxygen absorber composition may be produced. For example, a plastic with high oxygen barrier properties may be used as the injection molded plastic container. A liner is placed on the inside of the plastic container (i.e. the surface that comes into contact with the contents of the container) that is composed of the oxygen absorber. In a specific example, a film material, manufactured by Chevron with a trade name "EMCM" is used as the oxygen absorber liner. The material is composed of a polyolefin with cobalt carboxylate salt and BBP3. In yet another example, an additional liner is placed over the oxygen absorber liner on the inside of the plastic container (i.e. the surface that comes into contact with the contents of the container) that is compatible with the contents of the container and thus, acts as the "skin" layer. Suitable materials for the liner include material that are permeable to oxygen.

In another embodiment, the liner is inserted into open mold cavities in a matter of fractions of a second prior to the mold halves closing about a core to produce a desired container. Each liner is laid against its respective mold cavity wall and held therein as it closes. In one example, a supply of air is blown into the resin therein to make it conform to the mold contours with the liner on the cavity wall being correspondingly molded upon the resinous container wall.

In one example, when liners are supplied to the mold, (e.g. one to each mold half), a mechanical or other suitable method of inserting and applying the liners to the walls of the open halves is provided which must act sufficiently quickly before the two halves close otherwise imparting a time delay in the molding cycle. Since it is important for efficiency of operation that the plastic flow from the extruder not be interrupted, the time available is limited for insertion of liners on the walls of the mold halves without incurring a delay in the production cycle. This requires rapid action by the mechanism for inserting the liners on the walls of the mold halves. That is, the liner inserter must get in between the mold halves quickly while they are open and get out quickly before the space between the closing mold halves becomes too small for the mechanism to be safely present therein.

In one example, the mold cavities (e.g. holes of about 0.002 inch diameters) are each provided with spaced small masked openings at which a negative pressure is provided by connection of the mold half to a negative pressure source. By this means when a liner is inserted in the cavity, the spaced negative pressure spots act to receive the liner from a liner carrying mechanism and to hold the liner against the interior wall of the cavity. The liner carrying mechanism is thereupon withdrawn from the cavity region of the mold. A negative pressure is established in a manifold. The manifold may be a conventional pressurized air flow manifold which generates a negative pressure. During movement to the pick up positions, the liners may be rotated to assure proper angular orientation when picked up by the in-mold liner apparatus for placement in the mold sections. In one example, vacuum ports in suction cups of the pick up mechanism are continuously connected to a low vacuum source through vacuum manifold.

In another embodiment of placing the liner into the mold, a robot hand apparatus applies a the liner into a mold with a static electricity generating apparatus for generating static electricity on a holding surface. For example, this static electricity generating apparatus may comprise a holding member attached to one side of a platelike base continuous with an arm of a robot and having a holding surface with substantially the same shape as that of the liner on the side opposite to the side where the liner is attached, tungsten wires stretched in grooves opened on the side of the holding surface in the holding member using securing members, high-voltage cables with static electricity shields that are connected to the tungsten wires and are led to a high-voltage power source, and a plurality of suction holes opened perpendicularly to the holding surface of the holding member and connected to a vacuum generating source. The electrostatic generating apparatus attracts the liner to a robot hand attracting surface by negative pressure, moves the robot hand in place in the mold, gives static electricity to the liner by the static electricity generating apparatus of the robot hand before and after the movement, and applies the liner into the mold.

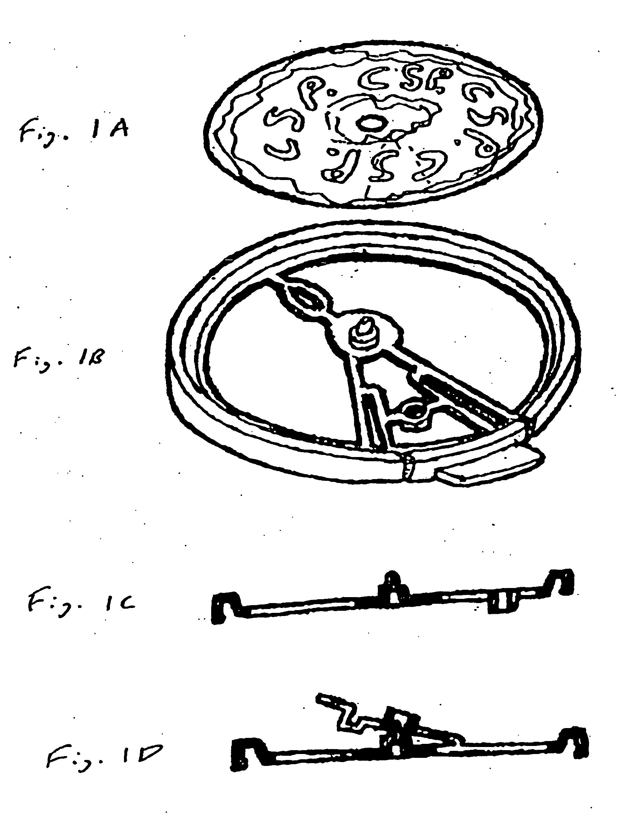

Figures 1 A - D, 2 A - C, 3 and 4 illustrate a cover that can be secured to a cup. For example, the cover can be secured to a cup that holds a hot or cold liquid (e.g. coffee, tea, soda, other drinks and other types of food). The cover may serve to maintain the temperature of the liquid and/or to inhibit spillage of the liquid.

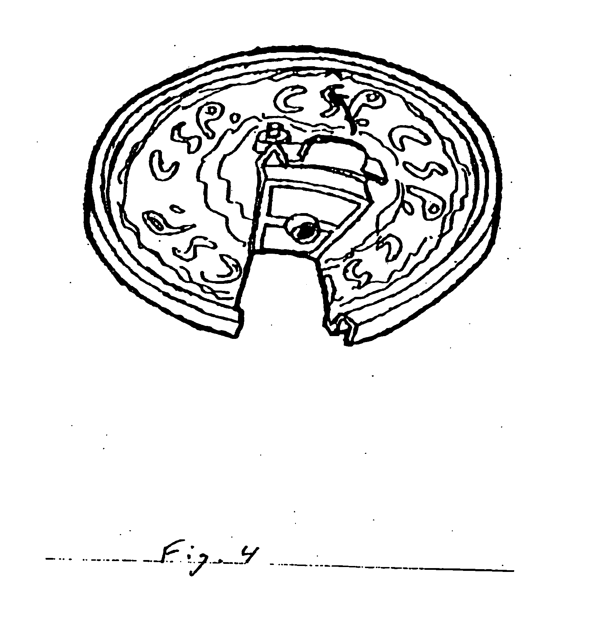

Specifically, Figures 1 A through D illustrate one example of this embodiment, where Fig. 1A is a liner that is composed of a polymeric material (e.g. polypropylene). The liner can serve one or more functions as detailed above (e.g. a printed label on the outside, a barrier material). As shown in Figs. 1A and 1B, the liner shown is Fig. 1A is pre-sized so that the liner can be properly fit into the frame shown in Fig. 1B. In one embodiment, the process is the in-mold liner process detailed above. For example, the liner is pre-printed (e.g. advertisement, directions for use, company name) and die-cut prior to insertion in the mold. Then, the liner is secured in the mold (e.g. by static electricity or other conventional methods) and the plastic (e.g. polypropylene) is injected into the mold to form the frame shown in Figure 1B (i.e. the plastic frame is formed around the liner). At about the same time, the liner is secured to the frame by either the melting method or adhesive method discussed above. The result is a cover with the liner being an integral member of the frame. In a specific embodiment, as further shown in Fig. 1B, the frame can have one or more cross-members that go across the circular frame so as to give the liner structural support. Further, as shown in Fig. 1B, the frame can also have cross-members that are located from the circular frame in order to allow a part of the cover to be opened to allow access to the liquid contents. This access port is shown in Fig. 4 that shows the liner and frame structure with the access port opened. In addition, as further shown in Fig. 1B, in yet another embodiment, the frame can have a tab that extends out from the frame to assist in opening the access port. In another embodiment, the liner can have perforations that coincide with the frame members of the frame so as to allow ease in opening the access port.

Figs. 1C is a side views of one embodiment of the frame shown in Figure 1B. Fig. 1D is a side view of the frame with the access port opened.

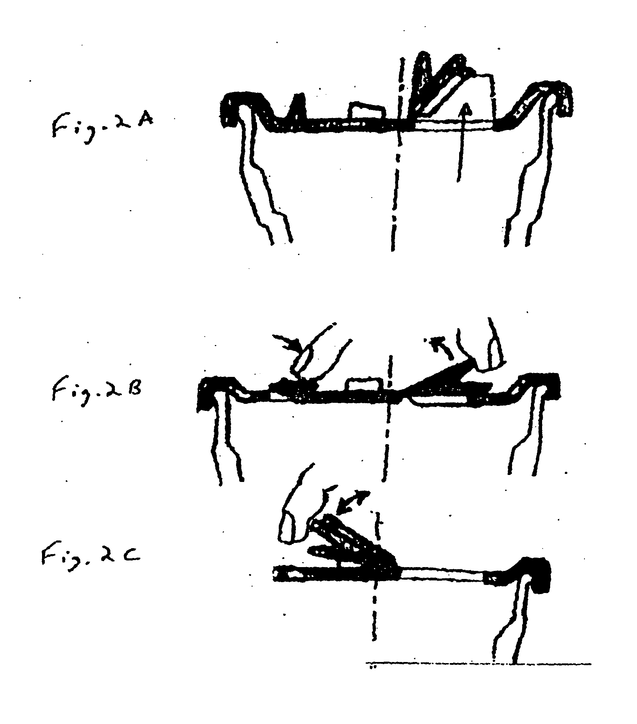

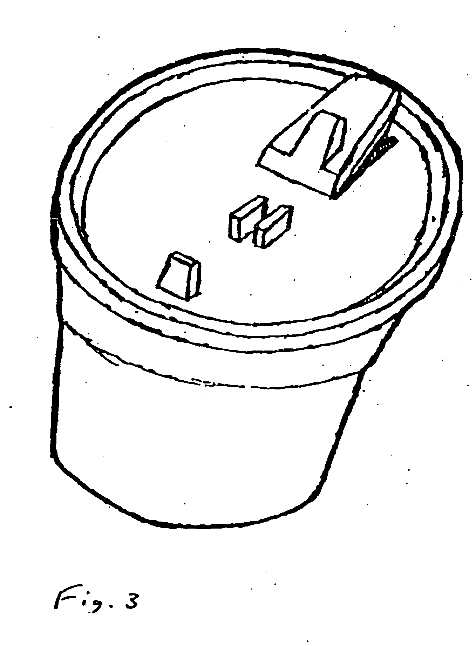

Figures 2A though 2C illustrate the operation of one embodiment with side views of the cover secured to a partial view of the cup. Fig. 2 A shows the direction of the access port. Fig. 2B illustrates the opening of the access port on the right side with a finger. In another embodiment, the left side shows a vent open being opened by a finger. Further, Figure 1B illustrates one embodiment of the vent hole with the top cross member having an oval hole. Fig. 2C then shows an embodiment where the access port is brought back to the point where it is secured to the opposite side of the liner. Figure 3 illustrates an embodiment of the cover on the cup with the access port being partially opened and showing the securing member on the back-side of the access port and the top of the cover.

## Claims

1. A method of forming a container having a liner formed in the mold wherein the method comprises the steps of:
inserting a liner by a mechanism within a mold for forming a container, wherein the liner is in the form of a film and is a composition comprising a material selected from the group consisting of an absorption material, a releasing material, a barrier material, and an activation material;
subsequently inserting a flowable, plastic material into the mold at a position which locates the liner on an interior position of the container; and
closing the mold.

2. The method of Claim 1 wherein the container is formed by extrusion, injection molding, or blow molding.

3. The method of Claim 1 wherein the liner is inserted in the mold by a pick and place mechanism.

4. The method of Claim 1 wherein the liner is placed on a core prior to inserting the flowable polymeric material.

5. The method of Claim 4 wherein the liner is retained on the core by applying a vacuum, or by applying an electrostatic charge to the core.

6. The method of Claim 4 further comprised of the steps of first applying the liner to the core and then heating the liner with hot air to shrink the polymeric liner.

7. A method as claimed in Claim 1, wherein the container comprises a container body formed of a molded polymeric material, the container body defining a storage space in which an item can be stored, and wherein the liner is provided on at least a portion of a storage space side of the container body, wherein the liner comprises a barrier material or a permeability-enhancing material or is a composition comprising an absorption material, a releasing material or an activation material.

8. A method as claimed in Claim 1, wherein the liner comprises an absorption material which is a desiccating compound.

9. A method as claimed in Claim 8, wherein the desiccating compound is selected from the group consisting of hydrate-forming compounds, chemically reactive compounds, and compositions engaging in physical absorption.

10. A method as claimed in Claim 1, wherein the liner comprises an absorption material which is an anhydrous salt.

11. A method as claimed in Claim 1, wherein the liner comprises an absorption material which is selected from the group consisting of molecular sieves, silica gels, clays (e. g. montmorillimite clay), synthetic polymers, and starches.

12. A method as claimed in Claim 1, wherein the liner comprises an absorption material which is selected from the group consisting of metals and alloys including nickel, copper, aluminum, silicon, solder, silver, gold; metal-plated particulate including silver-plated copper, silver-placed nickel, silver-plated glass microspheres; inorganic materials including BaTiO₃, SrTiO₃, SiO₂, Al₂O₃, ZnO, TiO₂, MnO, CuO, Sb₂O₃. WC, fused silica, fumed silica, amorphous fused silica, sol-gel silica, sol-gel titanates, mixed titanates, ion exchange resins, lithium-containing ceramics, hollow glass microspheres: carbon-based materials including carbon, activated charcoal, carbon black, ketchem black, diamond powder; and elastomers including polybutadiene, polysiloxane, and materials including semi-metals, and ceramics.

13. A method as claimed in Claim 1, wherein the liner comprises an absorption material which is an absorber of CO₂.

14. A method as claimed in Claim 1, wherein the liner comprises an absorption material which is calcium oxide.

15. A method as claimed in Claim 1, wherein the container body walls are formed of molded polymeric materials which provide a barrier to the passage of oxygen and wherein the liner composition is comprised of an oxygen absorbing material.

16. A method as claimed in Claim 15, wherein the container further comprises an oxygen permeable skin layer positioned on the container storage space side of the container walls.

17. A method as claimed in Claim 1, wherein the liner is a foam.

18. A method as claimed in Claim 1, wherein the liner comprises a releasing material which releases a fragrance or a flavor.

19. A method as claimed in Claim 1, wherein the liner comprises a releasing material which releases a compound selected from the group consisting of pesticides, pest repellents, antimicrobials, baits, aromatic therapeutic compositions, humidifying compositions, desiccating compositions; corrosion inhibitors; replenishers of gaseous compounds, and ripening agents.

20. A method as claimed in Claim 1, wherein the liner comprises a releasing material which is a biocide, preferably selected from the group consisting of pesticides, herbicides, nematacides, fungicides, rodenticides and/or mixtures thereof.

21. A method as claimed in Claim 1, wherein the liner comprises a releasing material which is a fragrance selected from the group consisting of natural essential oils, synthetic perfumes, and mixtures thereof.

22. A method as claimed in Claim 21, wherein the' fragrance is selected from the group consisting of lemon oil, mandarin oil, clove leaf oil, petitgrain oil, cedar wood oil, patchouli oil, lavandin oil, neroli oil, ylang oil, rose absolute jasmin absolute; natural resins including labdanum resin or olibanum resin; alcohols including geraniol, nerol, citronellol, linalol, tetrahydrogeraniol, betaphenylethyl alcohol, methyl phenyl carbinol, dimethyl benzyl carbinol, menthol or cedrol ; acetates and other esters derived form such alcohols; aldehydes such as citral, citronellal, hydroxycitronellal, lauric aldehyde, undecylenic aldehyde, cinnamaldehyde, amyl cinnamic aldehyde, vanillin or heliotropin; acetals derived from such aldehydes; ketones including methyl hexyl ketone, the ionones and methylionones; phenolic compounds including eugenol and isoeugenol; synthetic musks including musk xylene, musk ketone and ethylene brassylate.

23. A method as claimed in Claim 1, wherein the liner comprises an activation material which is activated by moisture, oxygen, an acid or a base.

24. A method as claimed in Claim 1, wherein the liner comprises an activation material which is activated by an enzyme system, preferably selected from the group consisting of glucose oxidase; a glucose/glucose oxidase combination; a glucose oxidase/sucrose combination; a starch/amylase/glucose oxidase combination; a cellulose/cellulase/glucose oxidase combination; a milk powder/lactase/glucose oxidase combination; a glucose oxidase/glucose isomerase/fructose combination; a glucose oxidase/lactase/whey solids/lactose combination; a glucose oxidase/lactase/lactose combination; a glucose oxidase/maltase/starch combination; a glucose oxidase/maltase/maltose combination; a mushroom tyrosinase/tyrosine combination; a glucose oxidase/sucrose/sucrase combination; an alcohol/alcohol oxidase; a lactate/lactate oxidase; an amino acid/amino acid oxidase; a galactose/galactose oxidase; a xanthine/xanthine oxidase; an amine/amine oxidase; an ascorbate/ascorbate oxidase; a chelione/chelione oxidase; and any combinations of these systems.

25. A method as claimed in Claim 24, wherein the activation material generates hydrogen peroxide.

26. A method as claimed in Claim 1, wherein the liner exhibits oxygen barrier properties.

27. A method as claimed in Claim 1, wherein the liner comprises ethylene vinyl alcohol.

28. A method as claimed in Claim 1, wherein the liner includes a label layer and a liner composition layer, the liner composition layer comprising a material selected from the group consisting of an absorption material, a releasing material, a barrier material, and an activation material.

29. A method as claimed in Claim 28, wherein the label is provided with text or graphic information which faces an outer container wall.

30. A method as claimed in Claim 28, wherein the label layer and the liner composition layer are co-laminated.

31. A method as claimed in Claim 1, wherein the container is comprised of a container body having walls formed of a molded polymeric material, the walls defining a storage space in which an item can be stored, wherein the liner is provided on at least a portion of a storage space side of the container walls, wherein the liner is comprised of a skin layer adjacent the storage space side of the container and the liner composition layer adjacent to the container walls comprised of a material selected from the group consisting of an absorption material, a releasing material, a barrier material, and an activation material.

32. A method as claimed in Claim 31, wherein the skin layer is permeable with respect to a preselected component that is positioned in the liner composition layer or a preselected component positioned in the storage space side of the container.

## Patentansprüche

1. Verfahren zum Formen eines Behälters, der eine eingeformte Auskleidung aufweist, wobei das Verfahren folgende Schritte umfasst:
durch eine Vorrichtung erfolgendes Einsetzen einer Auskleidung in ein Formwerkzeug zur Herstellung eines Behälters, wobei die Auskleidung die Form einer Folie besitzt und aus einem Material besteht, das aus der Gruppe ausgewählt ist, die absorbierende Materialien, Freisetzungs-Materialien, Barrieren-Materialien und Aktivierungs-Materialien umfasst,
danach Einführen eines fließfähigen Kunststoffmaterials in das Formwerkzeug an einer Stelle, die die Auskleidung an einer innen liegenden Stelle des Behälters festlegt und
Schließen der Form.

2. Verfahren nach Anspruch 1, bei welchem der Behälter durch Extrusion, Spritzgießen oder Blasformen hergestellt wird.

3. Verfahren nach Anspruch 1, bei dem die Auskleidung in das Formwerkzeug durch eine Aufnahme- und Positionierungsvorrichtung eingeführt wird.

4. Verfahren nach Anspruch 1, bei welchem die Auskleidung vor dem Einführen des fließfähigen polymeren Materials auf einem Kern platziert wird.

5. Verfahren nach Anspruch 4, bei dem die Auskleidung auf dem Kern dadurch festgehalten wird, dass ein Unterdruck angelegt wird, oder dass an den Kern eine elektrostatische Ladung angelegt wird.

6. Verfahren nach Anspruch 4, das weiterhin die Schritte umfasst, dass zunächst die Auskleidung auf den Kern aufgebracht und dass dann die Auskleidung mit heißer Luft erhitzt wird, um die polymere Auskleidung zu schrumpfen.

7. Verfahren nach Anspruch 1, bei dem der Behälter einen Behälterkörper umfasst, der aus einem geformten polymeren Material hergestellt ist, wobei der Behälterkörper einen Aufbewahrungsraum definiert, in dem ein Gegenstand aufbewahrt werden kann, und wobei die Auskleidung zumindest an einem Teil der Aufbewahrungsraum-Seite des Behälterkörpers vorgesehen wird, wobei die Auskleidung ein Barrierenmaterial oder ein die Permeabilität verstärkendes Material umfasst, oder eine Zusammensetzung ist, die ein Absorptions-Material, ein Freisetzungs-Material oder ein Aktivierungs-Material umfasst.

8. Verfahren nach Anspruch 1, bei dem die Auskleidung ein Absorptions-Material umfasst, bei dem es sich um eine Trocknungsverbindung handelt.

9. Verfahren nach Anspruch 8, bei dem die Trocknungsverbindung aus einer Gruppe ausgewählt ist, die ein Hydrat bildende Verbindungen, chemisch reaktive Verbindungen und Zusammensetzungen umfasst, die bei einer physikalischen Absorption eine Rolle spielen.

10. Verfahren nach Anspruch 1, bei dem die Auskleidung ein Absorptions-Material umfasst, bei dem es sich um ein wasserfreies Salz handelt.

11. Verfahren nach Anspruch 1, bei dem die Auskleidung ein Absorptions-Material umfasst, das aus der Gruppe ausgewählt ist, die Molekularsiebe, Kieselerde-Gele, Tone (beispielsweise Montmorillimit-Ton), synthetische Polymere und Stärken umfasst.

12. Verfahren nach Anspruch 1, bei dem die Auskleidung ein Absorptions-Material umfasst, das aus der Gruppe ausgewählt ist, die Metalle und Legierungen einschließlich Nickel, Kupfer, Aluminium, Silizium, Lötzinn, Silber, Gold, mit Metall plattierte Partikel einschließlich mit Silber plattierte Kupfer-Teilchen, mit Silber plattierte Nickel-Teilchen, mit Silber plattierte Glas-Mikrokügelchen umfasst, anorganische Materialien einschließlich BaTiO₃, SrTiO₃, SiO₂, Al₂O₃, ZnO, TiO₂, MnO, CuO, Sb₂O₃, WC, Quarzglas, Quarzstaub, amorphem Quarzstaub, Sol-Gel-Silizium Dioxid, Sol-Gel-Titanate, gemischte Titanate, Ionen-Austausch-Harze, Lithium enthaltende Keramiken, hohle Glas-Mikrokügelchen, auf Kohlenstoff basierende Materialien einschließlich Kohlenstoff, aktivierter Holzkohle, Ruß, Ketchem-Black, Diamantpulver und Elastomere einschließlich Polybutadien, Polysiloxan und Materialien umfasst, die Halbmetalle und Keramik umfassen.

13. Verfahren nach Anspruch 1, bei dem die Auskleidung ein Absorptions-Material umfasst, dass ein Absorber von CO₂ ist.

14. Verfahren nach Anspruch 1, bei dem die Auskleidung ein Absorptions-Material umfasst, bei dem es sich um Kalziumoxid handelt.

15. Verfahren nach Anspruch 1, bei dem die Behälterkörperwände aus geformten polymeren Materialien hergestellt sind, die eine Barriere für den Durchgang von Sauerstoff bilden, und bei dem die Auskleidungs-Zusammensetzung aus einem Sauerstoff absorbierenden Material besteht.

16. Verfahren nach Anspruch 15, bei dem der Behälter weiterhin eine für Sauerstoff durchlässige Haut-Schicht umfasst, die auf der Behälter-Aufbewahrungsraum-Seite der Behälterwände angebracht ist.

17. Verfahren nach Anspruch 1, bei dem die Auskleidung ein Schaum ist.

18. Verfahren nach Anspruch 1, bei dem die Auskleidung ein Freisetzungsmaterial umfasst, das einen Duftstoff oder ein Aroma freisetzt.

19. Verfahren nach Anspruch 1, bei dem die Auskleidung ein Freisetzungsmaterial umfasst, das eine Verbindung freisetzt, die aus der Gruppe ausgewählt ist, die Pestizide, Ungezieferschutzmittel, antimikrobiale Stoffe, Lockmittel, aromatische therapeutische Verbindungen, Befeuchtungszusammensetzungen, Trocknungszusammensetzungen, Korrosionshemmer, Ergänzungsmittel für gasförmige Verbindungen und Reifungswirkstoffe umfasst.

20. Verfahren nach Anspruch 1, bei dem die Auskleidung ein Freisetzungs-Material umfasst, bei dem es sich um ein Biozid handelt, das vorzugsweise aus der Gruppe ausgewählt ist, die Pestizide, Pflanzenschutzmittel, Nematazide, Fungizide, Rodentizide und/oder Mischungen hiervon umfasst.

21. Verfahren nach Anspruch 1, bei dem die Auskleidung ein Freisetzungs-Material umfasst, bei dem es sich um einen Duftstoff handelt, der aus der Gruppe ausgewählt ist, die natürliche essentielle Öle, synthetische Parfüme und Mischungen hiervon umfasst.

22. Verfahren nach Anspruch 21, bei dem der Duftstoff aus der Gruppe ausgewählt ist, die Limonenöl, Mandarinenöl, Nelkenöl, Bitterorangenöl, Zedernholzöl, Patschuliöl, Lavendelöl, Neroliöl, Ylangöl, Rose absolute, Jasmin absolute; natürliche Harze einschließlich Labdanumharz oder Ölbaumharz, Alkohole, einschließlich Geraniol, Nerol, Zitronellol, Linalol, Tetrahydrogeraniol, Betaphenylethylalkohol, Methylphenylkarbinol, Dimethylbenzylkarbinol, Menthol oder Zedrol; Azetate und andere Ester, die von solchen Alkoholen abgeleitet sind, Aldehyde wie z.B. Zitral, Zitronellal, Hydroxyzitronellal, Lauraldehyd, Undezylenaldehyd, Zimtaldehyd, Amyl-Zimtaldehyd, Vanillin oder Heliotropin; Azetale, die von solchen Aldehyden abgeleitet sind, Ketone einschließlich Methylhexylketon, lonone und Methylionone; phenolische Verbindungen einschließlich Eugenol und Isoeugenol; synthetischem Moschus einschließlich Moschusxylen, Moschusketon und Ethylenbrassylat umfasst.

23. Verfahren nach Anspruch 1, bei dem die Auskleidung ein Aktivierungs-Material umfasst, das durch Feuchtigkeit, Sauerstoff, eine Säure oder eine Base aktiviert wird.

24. Verfahren nach Anspruch 1, bei dem die Auskleidung ein Aktivierungs-Material umfasst, das durch ein Enzymsystem aktiviert wird, das vorzugsweise aus der Gruppe ausgewählt ist, die Glukose-Oxidase, eine Glukose/Glukose-Oxidase-Kombination; eine Glukose-Oxidase/Succhrose-Kombination; eine Stärke/Amylase/Glukose-Oxidase-Kombination; eine Zellulose/Zellulase/Glukose-Oxidase-Kombination; eine Milchpulver/Laktase/Glukose-Oxidase-Kom - bination; eine Glukose-Oxidase/Glukose-Isomerase/Fruktose-Kombination; eine Glukose-Oxidase/Laktase/Molke-Feststoffe/Laktose-Kombination; eine Glukose-Oxidase/Laktase/Laktose-Kombination; eine Glukose-Oxidase/Maltase/Stärke-Kombination; eine Glukose-Oxidase/Maltase/Maltose-Kombination; eine Pilz-Tyrosinase/Tyrosin-Kombination; eine Glukose-Oxidase/Succhrose/Succhrase-Kombination; eine Alkohol/Alkohol-Oxidase; eine Laktat/Laktat-Oxidase; eine Amino-Azid/Amino-Säure-Oxidase; eine Galaktose/Galaktose-Oxidase; eine Xanthin/Xanthin-Oxidase; eine Amin/Amin-Oxidase; eine Askorbat/Askorbat-Oxidase; eine Chelion/Chelion-Oxidase; und irgendeine Kombination aus diesen Systemen umfasst.

25. Verfahren nach Anspruch 24, bei dem das Aktivierungs-Material Wasserstoffperoxyd erzeugt.

26. Verfahren nach Anspruch 1, bei dem die Auskleidung Sauerstoff-Barriere-Eigenschaften aufweist.

27. Verfahren nach Anspruch 1, bei dem die Auskleidung Ethylenvinylalkohol umfasst.

28. Verfahren nach Anspruch 1, bei dem die Auskleidung eine Etiketten-Schicht und eine Auskleidungs-Zusammensetzungs-Schicht umfasst, wobei die Auskleidungs-Zusammensetzungs-Schicht ein Material umfasst, das aus der Gruppe ausgewählt ist, die ein Absorptions-Material, ein Freisetzungs-Material, ein Barrieren-Material und ein Aktivierungs-Material umfasst.

29. Verfahren nach Anspruch 28, bei dem das Etikett mit einem Text oder einer graphischen Information versehen ist, die einer äußeren Behälterwand zugewandt ist.

30. Verfahren nach Anspruch 28, bei dem die Markierungs-Schicht und die Auskleidungs-Zusammensetzungs-Schicht kolaminiert sind.

31. Verfahren nach Anspruch 1, bei dem der Behälter einen Behälterkörper mit Wänden aufweist, die aus einem geformten polymeren Material bestehen, wobei die Wände einen Aufbewahrungsraum definieren, in dem ein Gegenstand aufbewahrt werden kann, wobei die Auskleidung an zumindest einem Teil der Aufbewahrungsraum-Seite der Behälterwände vorgesehen ist, wobei die Auskleidung eine Haut-Schicht, die der Aufbewahrungsraum-Seite des Behälters benachbart ist, und eine Auskleidungs-Zusammensetzungs-Schicht umfasst, die den Behälterwänden benachbart ist und aus einem Material besteht, das aus der Gruppe ausgewählt ist, die Absorptions-Materialien, Freisetzungs-Materialien, Barrieren-Materialien und Aktivierungs-Materialien umfasst.

32. Verfahren nach Anspruch 31, bei dem die Haut-Schicht bezüglich einer zuvor ausgewählten Komponente durchlässig ist, die sich in der Auskleidungs-Zusammensetzungs-Schicht befindet, oder für eine vorausgewählte Komponente, die sich auf der Aufbewahrungsraum-Seite des Behälters befindet.

## Revendications

1. Procédé de formation d'un récipient ayant une doublure formée dans le moule, dans lequel le procédé comprend les étapes consistant :
à insérer une doublure à l'intérieur d'un moule pour former un récipient, par un mécanisme dans lequel la doublure est sous la forme d'un film et est une composition comprenant un matériau choisi dans le groupe constitué par un matériau d'absorption, un matériau de libération, un matériau barrière et un matériau d'activation ;
à insérer ensuite une matière plastique fluide dans le moule selon une position qui localise la doublure sur une position intérieure du récipient ; et
à fermer le moule.

2. Procédé selon la revendication 1, dans lequel le récipient est formé par extrusion, moulage par injection ou moulage par soufflage.

3. Procédé selon la revendication 1, dans lequel la doublure est insérée dans le moule par un mécanisme de preneur-placeur.

4. Procédé selon la revendication 1, dans lequel la doublure est placée sur un noyau avant d'insérer la matière polymère fluide.

5. Procédé selon la revendication 4, dans lequel la doublure est retenue sur le noyau en appliquant un vide, ou en appliquant une charge électrostatique au noyau.

6. Procédé selon la revendication 4, comprenant en outre les étapes consistant à appliquer d'abord la doublure sur le noyau puis à chauffer la doublure avec de l'air chaud pour rétracter la doublure polymère.

7. Procédé selon la revendication 1, dans lequel le récipient comprend un corps de récipient formé d'une matière polymère moulée, le corps de récipient définissant un espace de stockage dans lequel un article peut être stocké, et dans lequel la doublure est fournie sur au moins une partie d'un côté espace de stockage du corps de récipient, dans lequel la doublure comprend un matériau barrière ou un matériau accroissant la perméabilité ou est une composition comprenant un matériau d'absorption, un matériau de libération ou un matériau d'activation.

8. Procédé selon la revendication 1, dans lequel la doublure comprend un matériau d'absorption qui est un composé desséchant.

9. Procédé selon la revendication 8, dans lequel le composé desséchant est choisi dans le groupe constitué par les composés formant un hydrate, les composés chimiquement réactifs et les compositions participant à l'absorption physique.

10. Procédé selon la revendication 1, dans lequel la doublure comprend un matériau d'absorption qui est un sel anhydre.

11. Procédé selon la revendication 1, dans lequel la doublure comprend un matériau d'absorption qui est choisi dans le groupe constitué par les tamis moléculaires, les gels de silice, les argiles (par exemple, argile montmorillonite), les polymères synthétiques et les amidons.

12. Procédé selon la revendication 1, dans lequel la doublure comprend un matériau d'absorption qui est choisi dans le groupe constitué par les métaux et les alliages incluant le nickel, le cuivre, l'aluminium, le silicium, une brasure, l'argent, l'or ; une matière particulaire plaquée de métal incluant le cuivre plaqué de nickel, le nickel plaqué d'argent, les microsphères de verre plaquées d'argent ; les matériaux inorganiques incluant BaTiO₃, SrTiO₃, SiO₂, Al₂O₃, ZnO, TiO₂, MnO, CuO, Sb₂O₃, WC, un verre de silice, une silice sublimée, un verre de silice amorphe, une silice sol-gel, les titanates sol-gel, les titanates mixtes, les résines échangeuses d'ions, les céramiques contenant du lithium, les microsphères de verre creuses ; les matériaux à base de carbone incluant le carbone, le charbon activé, le noir de carbone, le noir ketcham, une poudre de diamant ; et les élastomères incluant un polybutadiène, un polysiloxane, et les matériaux incluant des semi-métaux, et les céramiques.

13. Procédé selon la revendication 1, dans lequel la doublure comprend un matériau d'absorption qui est un absorbeur de CO₂.

14. Procédé selon la revendication 1, dans lequel la doublure comprend un matériau d'absorption qui est l'oxyde de calcium.

15. Procédé selon la revendication 1, dans lequel les parois du corps de récipient sont formées de matières polymères moulées qui procurent une barrière au passage de l'oxygène et dans lequel la composition de la doublure est composée d'un matériau absorbant l'oxygène.

16. Procédé selon la revendication 15, dans lequel le récipient comprend en outre une couche superficielle perméable à l'oxygène placée sur le côté espace de stockage du récipient des parois du récipient.

17. Procédé selon la revendication 1, dans lequel la doublure est une mousse.

18. Procédé selon la revendication 1, dans lequel la doublure comprend un matériau de libération qui libère une fragrance ou une flaveur.

19. Procédé selon la revendication 1, dans lequel la doublure comprend un matériau de libération qui libère un composé choisi dans le groupe constitué par les pesticides, les répulsifs pour nuisibles, les antimicrobiens, les appâts, les compositions thérapeutiques aromatiques, les compositions humidifiantes, les compositions desséchantes ; les inhibiteurs de corrosion ; les régénérateurs de composés gazeux, et les agents de mûrissement.

20. Procédé selon la revendication 1, dans lequel la doublure comprend un matériau de libération qui est un biocide, de préférence choisi dans le groupe constitué par les pesticides, les herbicides, les nématicides, les fongicides, les rodenticides et/ou des mélanges de ceux-ci.

21. Procédé selon la revendication 1, dans lequel la doublure comprend un matériau de libération qui est une fragrance choisie dans le groupe constitué par les huiles essentielles naturelles, les parfums synthétiques et des mélanges de ceux-ci.

22. Procédé selon la revendication 21, dans lequel la fragrance est choisie dans le groupe constitué par l'huile de citron, l'huile de mandarine, l'huile de feuille de clou de girofle, l'huile de petit-grain, l'huile de bois de cèdre, l'huile de patchouli, l'huile de lavandin, l'huile de néroli, l'huile d'ylang-ylang, l'absolu de rose, l'absolu de jasmin ; les résines naturelles incluant la résine labdanum ou la résine oliban ; les alcools incluant le géraniol, le nérol, le citronellol, le linalol, le tétrahydrogéraniol, l'alcool bétaphényléthylique, le méthyl phényl carbinol, le diméthyl benzyl carbinol, le menthol ou le cédrol ; les acétates et autres esters dérivés de tels alcools ; les aldéhydes tels que le citral, le citronellal, l'hydroxycitronellal, l'aldéhyde laurique, l'aldéhyde undécylénique, le cinnamaldéhyde, l'aldéhyde amyl cinnamique, la vanilline ou l'héliotropine ; les acétals dérivés de tels aldéhydes ; les cétones incluant la méthyl hexyl cétone, les ionones et les méthylionones ; les composés phénoliques incluant l'eugénol et l'isoeugénol ; les muscs synthétiques incluant le musc xylène, le musc cétone et le brassylate d'éthylène.

23. Procédé selon la revendication 1, dans lequel la doublure comprend un matériau d'activation qui est activé par de l'humidité, de l'oxygène, un acide ou une base.

24. Procédé selon la revendication 1, dans lequel la doublure comprend un matériau d'activation qui est activé par un système d'enzyme, de préférence choisi dans le groupe constitué par la glucose oxydase ; une combinaison de glucose/glucose oxydase ; une combinaison de glucose oxydase/saccharose ; une combinaison d'amidon/amylase/glucose oxydase ; une combinaison de cellulose/cellulase/glucose oxydase ; une combinaison de lait en poudre/lactase/glucose oxydase ; une combinaison de glucose oxydase/glucose isomérase/fructose ; une combinaison de glucose oxydase/lactase/substances solides de petit-lait/lactose ; une combinaison de glucose oxydase/lactase/lactose ; une combinaison de glucose oxydase/maltase/amidon ; une combinaison de glucose oxydase/maltase/maltose ; une combinaison de tyrosinase de champignon/tyrosine ; une combinaison de glucose oxydase/saccharose/sucrase ; un alcool/alcool oxydase ; un lactate/lactate oxydase ; un acide aminé/acide aminé oxydase ; un galactose/galactose oxydase ; une xanthine/xanthine oxydase ; une amine/amine oxydase ; un ascorbate/ascorbate oxydase ; une chélione/chélione oxydase ; et toutes combinaisons de ces systèmes.

25. Procédé selon la revendication 24, dans lequel le matériau d'activation génère du peroxyde d'hydrogène.

26. Procédé selon la revendication 1, dans lequel la doublure présente des propriétés de barrière à l'oxygène.

27. Procédé selon la revendication 1, dans lequel la doublure comprend de l'éthylène alcool vinylique.

28. Procédé selon la revendication 1, dans lequel la doublure inclut une couche d'étiquette et une couche de composition de la doublure, la couche de composition de la doublure comprenant un matériau choisi dans le groupe constitué par un matériau d'absorption, un matériau de libération, un matériau barrière et un matériau d'activation.

29. Procédé selon la revendication 28, dans lequel l'étiquette est dotée d'un texte ou d'informations graphiques qui font face à une paroi externe du récipient.

30. Procédé selon la revendication 28, dans lequel la couche d'étiquette et la couche de composition de la doublure sont co-stratifiées.

31. Procédé selon la revendication 1, dans lequel le récipient se compose d'un corps de récipient ayant des parois formées d'une matière polymère moulée, les parois définissant un espace de stockage dans lequel un article peut être stocké, dans lequel la doublure est fournie sur au moins une partie d'un côté espace de stockage des parois du récipient, dans lequel la doublure se compose d'une couche superficielle adjacente au côté espace de stockage du récipient et de la couche de composition de doublure adjacente aux parois du récipient composée d'un matériau choisi dans le groupe constitué par un matériau d'absorption, un matériau de libération, un matériau barrière et un matériau d'activation.

32. Procédé selon la revendication 31, dans lequel la couche superficielle est perméable par rapport à un constituant présélectionné qui est placé dans la couche de composition de la doublure ou un constituant présélectionné placé dans le côté espace de stockage du récipient.
